# EUROPEAN PATENT APPLICATION

(11) **EP 4 137 253 A1**
(43) Date of publication of application: **22.02.2023**
(21) Application number: 20936574.1
(22) Date of filing: 20.05.2020
(51) Int. Cl.: B22F 3/105, B33Y 10/00

(54) **ADDITIVE MANUFACTURING METHOD**

(71) Applicant: Siemens Aktiengesellschaft, 80333 München (DE); Siemens Ltd., China, Chaoyang District Beijing 100102 (CN)
(72) Inventor: LI, Changpeng, Beijing 100102 (CN); ZHANG, Qingqing, Shanghai 200083 (CN); SVYNARENKO, Kateryna, Shanghai 200082 (CN); CHEN, Guofeng, Beijing 100135 (CN)
(74) Representative: Isarpatent
(86) International application number: PCT/CN2020/091329
(87) International publication number: WO 2021/232298

(57) **Abstract**

An additive manufacturing method, comprising the following steps: on the basis of a shape of a model of a printing member (P2), generating a model of a support member(S2); continuously introducing an inert gas into an additive manufacturing printing device, spreading a first material powder in a forming cylinder (150) in the additive manufacturing printing device, performing laser scanning on the first material powder, such that the first material powder is melt, and on the basis of the model of the printing member (P2),the printing member (P2) and the support member (S2) below a portion of the printing member (P2) are formed layer by layer; and introducing an ammonia gas into the additive manufacturing printing device, spreading the first material powder in the forming cylinder (150) in the additive manufacturing printing device, performing laser scanning on the first material powder, such that the first material powder is melt, and on the basis of the model of the support member (S2), a nitride layer (200) is formed on an upper surface of the support member (S2). The present invention provides a support member that is easy to be removed, guarantees printing quality, and has a low cost.

## Description

### Technical Field

The present invention relates to the field of 3D printing, and in particular to an additive manufacturing method.

### Background Art

Additive manufacturing is an advanced manufacturing technique rapidly developing in the world, which has demonstrated great application potential. Selected laser melting (SLM) is an additive manufacturing technique that allows rapid manufacture of parts that are the same as CAD models by melting in selected partitions using a laser. Selective laser melting technology currently has extensive applications. Different from a conventional material removal mechanism, additive manufacturing is based on a completely contrary materials incremental manufacturing philosophy, in which a metallic powder is melted by a high-power laser during selective laser melting, and parts/components are formed layer by layer by 3D CAD input, such that components with complex internal trenches are successfully manufactured. Additive manufacturing techniques offer the unique potential of arbitrarily manufacturing complexly structured components that are in general not easily manufacturable by traditional manufacturing processes.

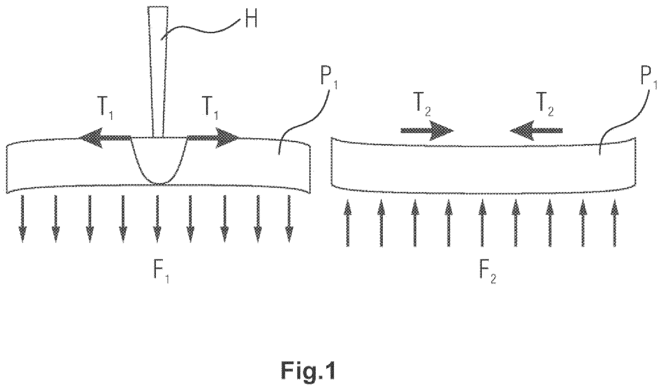

In a 3D printing process, a metallic powder is melted using a high-power laser source and formed into parts/components layer by layer based on a 3D CAD model. However, 3D printing has limitations, such as the generation of residual stress. Fig. 1 is a schematic diagram of thermal deformation of a material due to rapid melting and curing in 3D printing, which results in the deformation of the final printing member P₁ compared with the initial CAD design. In addition, if the printing member P₁ does not have a solid support structure and a sufficiently heat-conducting channel, then printing defects will be generated. Specifically, as shown in Fig. 1, when the 3D printing device prints, a high-temperature laser beam, which, in general, is emitted vertically downward to generate the heat H that radiates vertically from the top down, so the surface temperature of the whole sample P₁ becomes very high, and the laser heating direction T₁ extends from the middle of the sample P₁ to the edge thereof, wherein some areas expand, so the sample P₁, as a whole, is subjected to a vertically downward pulling force F₁, and the printed piece P₁ will have a downward deformation in its edge portion as shown in the left part of Fig. 1. After completion of 3D printing, the sample P₁ cools and, when it cools, the heat T₂ of the sample P₁ tends to converge, so the sample P₁, as a whole, is subjected to an upward stress F₂, which results in an upward deformation in an edge portion of the sample as shown in the right part of Fig. 1.

To solve the above-mentioned problem of material deformations caused by thermal expansion in 3D printing, the prior art will usually provide a sufficient mechanical supporting force to resist residual stress, thereby avoiding material deformation. In addition, the support member also acts as a solid support and a heat-conducting channel below an overhang structure to avoid possible printing defects caused by local overheating. According to the operation manual of a 3D printing device, if the printing member has an inclination angle smaller than 45 degrees and a projection larger than 1 mm, then it is necessary to provide a support member during the printing process, and the printing member is removed when the printing is completed.

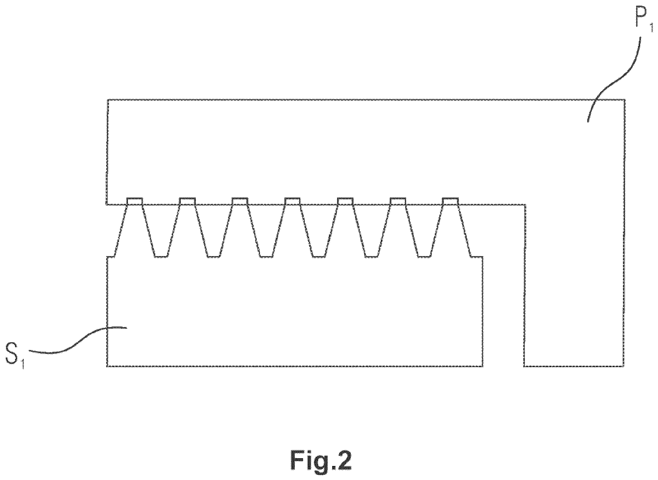

However, removal of the support member after printing requires additional work, increases cost, and affects the surface quality of the printing member, which will reduce the surface fluidity and significantly shorten the fatigue life, so it is often necessary, after removing the support member, to perform additional surface polishing of the portion of the printing member adjacent to the support member. As shown in Fig. 2, to ensure successful removal of the support member S₁, the connecting part between the printing member P₁ and the support member S₁ is usually designed to be serrated or latticed to reduce the area of contact between the printing member P₁ and the support member S₁. However, in some cases, a serrated support member S₁ cannot provide a sufficient mechanical supporting force to overcome a thermal deformation force or residual stress, and its serrated part may even damage and deform the printing member P₁. Moreover, a serrated support member S₁ will also significantly reduce the thermal conductivity, consequently affecting the overall 3D printing capability.

### Summary of the Invention

The present invention provides an additive manufacturing method, comprising the steps of: on the basis of a model of a printing member, generating a model of a support member, wherein at least one portion of the support member is in contact with a lower part of at least one portion of the printing member, and a nitride layer is formed on an upper surface of at least one portion of the support member that comes into contact with the printing member; continuously introducing an inert gas into an additive manufacturing printing device, spreading a first material powder in a forming cylinder in the additive manufacturing printing device, performing laser scanning on the first material powder, such that the first material powder is melted, and on the basis of the model of the printing member, the printing member and the support member, which is in contact with a lower part of one portion of the printing member, are formed layer by layer; introducing an ammonia gas into the additive manufacturing printing device, spreading the first material powder in the forming cylinder in the additive manufacturing printing device, performing laser scanning on the first material powder, such that the first material powder is melted, and on the basis of the model of the support member, a nitride layer is formed on an upper surface of the support member.

Further, the step of introducing an ammonia gas into the additive manufacturing printing device further comprises the step of: partitioning ammonia input according to the additive manufacturing printing area, and introducing a second gas into the additive manufacturing printing device for the partition where the nitride layer of the support member is located.

Further, the support member has a density lower than that of a printing member.

Further, the additive manufacturing method further comprises the step of: removing the support member from the printing member by applying an external force on the nitride layer of the support member.

Further, a high-energy vibration process or a sand blasting process is adopted in the removal step.

Further, the first gas is nitrogen gas or ammonia gas.

Further, the nitride layer has a thickness ranging from 10 microns to 1000 microns.

With an additive manufacturing method provided by the present invention, it is possible to obtain a support member that is sufficiently strong and easily removable after additive manufacturing is completed, thus ensuring high 3D printing quality while reducing costs. A nitride layer provided by the present invention has a sufficiently large contact area to avoid thermal deformation of a material and achieves high heat-conducting performance. In addition, the additive manufacturing method provided by the present invention, together with a nitriding support, further comprises a surface hardening step, and the printing member is highly resistant to wear.

### Brief Description of the Drawings

Fig. 1 is a schematic diagram of thermal deformation of a material due to rapid melting and curing during 3D printing;
Fig. 2 is a schematic diagram of the connection between the printing member and the support member;
Fig. 3 is a schematic diagram of a selective laser melting device according to a specific embodiment of the present invention;
Fig. 4 is a structural diagram of a printing member and a support member according to a specific embodiment of the present invention.

### Specific Embodiments

Specific embodiments of the present invention will be described below in conjunction with the drawings.

With an additive manufacturing method provided by the present invention, it is possible to obtain a support member that is sufficiently strong and easily removable after additive manufacturing is completed, which will not affect the contact surface between the printing member and the support member, while improving material deformation of the support member caused by residual stress, so that the printing member still has very high surface quality after the support member is removed.

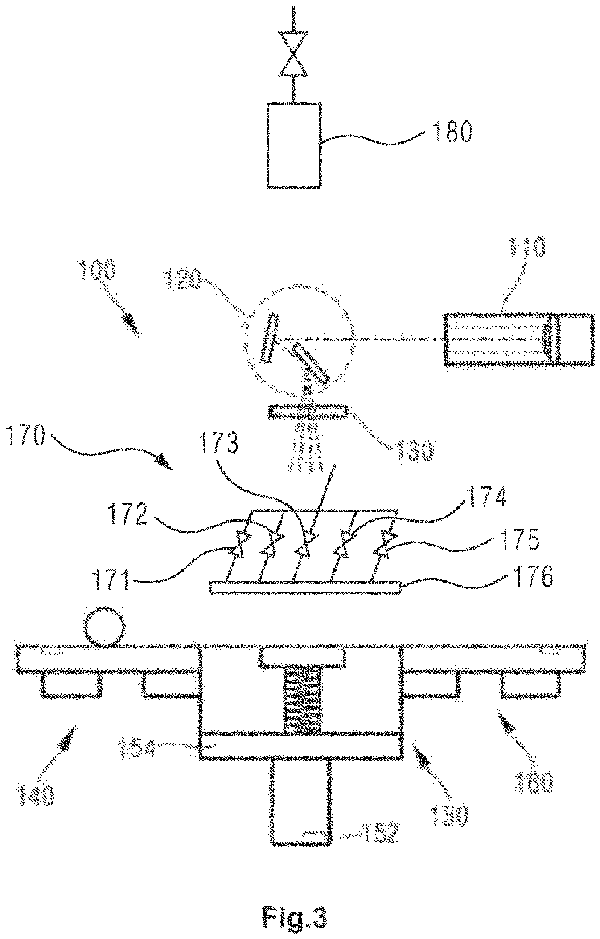

Preferably, an additive manufacturing method provided by the present invention is performed in a selective laser melting device. Fig. 3 is a schematic diagram of a selective laser melting device. As shown in Fig. 3, the selective laser melting device 100 comprises a laser source 110, a mirror scanner 120, a prism 130, a powder feeding cylinder 140, a forming cylinder 150, and a recovery cylinder 160. The laser source 110 is arranged above the selective laser melting device 100 to function as a heating source for a metallic powder, that is, to melt the metallic powder for 3D printing.

A first piston (not shown) that can move up and down is provided in a lower part of the powder feeding cylinder 140, wherein the metallic powder for use is placed in a chamber above the first piston of the powder feeding cylinder 140 and as the first pisA 3D printing member placement table 154 is arranged, a 3D printing member is clamped above the placement table 154, and a second piston 152 is fixed below the placement table 154, wherein the second piston 152 and the placement table 154 are arranged to be mutually perpendicular. During 3D printing, the second piston 152 moves downwardly to form a printing space in the forming cylinder 220. The laser source 110 for laser scanning should be arranged above the forming cylinder 150 in the selective laser melting device, the laser position is adjusted by adjusting the angle of the prism 130 of the mirror scanner 120, and the area where the metallic powder is to be melted by laser is determined by adjusting the prism 130. The powder feeding cylinder 140 further comprises a roller (not shown), the metallic powder is deposited on an upper surface of the first piston, and the first piston moves vertically and upwardly to transfer the metallic powder to the top of the powder feeding cylinder 140.

The roller can roll on the metallic powder to feed the metallic powder into the forming cylinder 150. Thus, laser scanning is continuously performed on the metallic powder to decompose the metallic powder into a powder matrix, and then laser scanning is continued on the powder matrix until the powder matrix is sintered from bottom up into a printing member with a preset shape.

The selective laser melting device 100 further comprises a first gas input apparatus 180, which is usually located on the top of the selective laser melting device 100, and is used to introduce an inert gas for a 3D printing process, so an inert gas may be diffused to the printing area of the entire forming cylinder 150 by the first gas input apparatus 180.

In addition, the selective laser melting device 100 further comprises a second gas input apparatus 170, which is located on one side of the selective laser melting device 100 and is used to introduce another gas to the side of the forming cylinder 150. In this embodiment, ammonia gas is introduced into the second gas input apparatus 170. The second gas input apparatus 170 comprises a plurality of gas outlets, each of which is provided with a valve for controlling its opening and closing, that is, the first valve 171, the second valve 172, the third valve 173, the fourth valve 174, the fifth valve 175, and the diffusion plate 176 as shown in Fig. 3, the diffusion plate 176 being provided with a plurality of nozzles. The above-mentioned valves control the areas for ammonia gas output according to different partitions of areas, and the nitride layer of the support member may be formed according to the partitioning. For example, when a nitride layer needs to be formed in an edge area of the forming cylinder 150, the first valve 171 and the fifth valve 175 are opened to introduce an ammonia gas, which is then inputted into the forming cylinder 150 through the corresponding nozzles on the diffusion plate 176; when a nitride layer needs to be formed in a middle area of the forming cylinder 150, the second valve 172 and the fourth valve 174 are opened to introduce an ammonia gas, which is then inputted into the forming cylinder 150 through the corresponding nozzles on the diffusion plate 176; when a nitride layer needs to be formed in a middle area of the forming cylinder 150, the third valve 173 is opened to introduce an ammonia gas, which is then inputted into the forming cylinder 150 through the corresponding nozzles on the diffusion plate 176.

In general, an inert gas must be introduced during laser melting to avoid possible material oxidation. Therefore, throughout the process of the present invention, both the main body of the printing member and that of the support member need to be formed in an inert gas environment, but an ammonia gas needs to be introduced while a nitride layer of the support member is formed, in which case an inert coexist and an ammonia gas is introduced by partitions to reduce the impact of the ammonia gas on the inert gas environment of the entire printing chamber.

A first aspect of the present invention provides an additive manufacturing method, comprising the following steps.

First, step S1 is performed to generate a model of a support member S₂ on the basis of a shape of a model of a printing member P₂, wherein at least one portion of the support member S₂ is in contact with a lower part of at least one portion of the printing member P₂, and a nitride layer 200 is formed on an upper surface of at least one portion of the support member S₂ that comes into contact with the printing member P₂. The support member S₂ is usually arranged below the printing member P₂ or below a concave part of the printing member P₂, the support member S₂ may be provided in many quantities or may be serrated as a whole, and the printing member P₂ and the support member S₂ are at least partially in contact with each other, the surface of contact being the nitride layer 200 of the support member S₂. In the parts without the nitride layer 200, the printing member P₂ and the support member S₂ are not in contact with each other, wherein, for example, the left side of the support member S₂ is not in contact with the printing member P₂, with a gap g left therebetween.

Then, steps S2 and S2 are performed.

In step S2, an inert gas is continuously introduced into the first gas input apparatus 180 in the selective laser melting device 100, a first material powder is spread in the forming cylinder 150 in the selective laser melting device 100, and laser scanning is performed on the first material powder, such that the first material powder is melted, and on the basis of the model of the printing member P₂, the printing member P₂ and the support member S₂ below a portion of the printing member P₂ are formed layer by layer.

In step S3, an ammonia gas is introduced into the second gas input apparatus 170 in the selective laser melting device 100, a first material powder is spread in the forming cylinder 150 in the selective laser melting device 100, and laser scanning is performed on the first material powder, such that the first material powder is melted, and on the basis of the model of the support member S₂, a nitride layer 200 is formed on an upper surface of the support member S₂. In this case, the ammonia gas is decomposed into N and H atoms under the intense heat of the laser, and the N atoms react with a metallic powder to form the nitride layer 200, for example, reacting with iron or nickel to form a nitride.

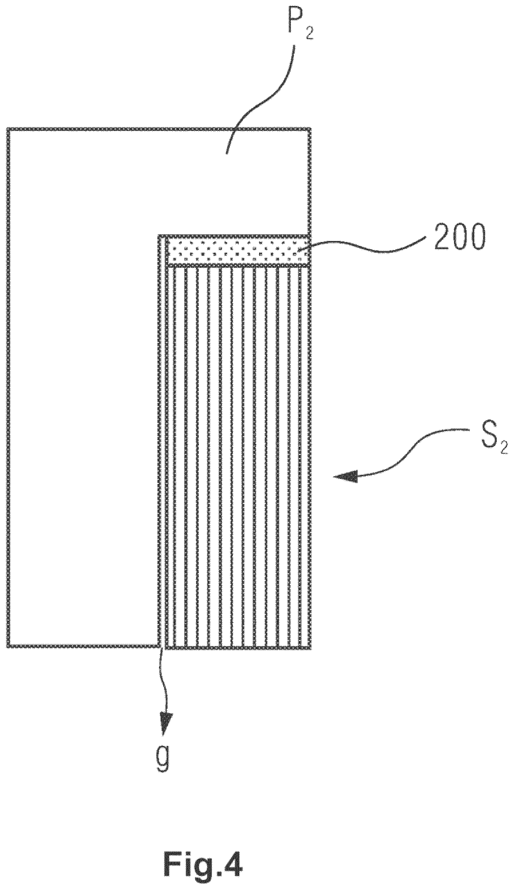

It should be noted that while the printing member P₂ is formed in step S2 and the support member S₂ is formed in step S3, there is no restriction on a specific sequence thereof. With the present invention, the printing member P₂ may be formed before the support member S₂, or the support member S₂ may be formed before the printing member P₂, or the printing member P₂ and the support member S₂ may be formed simultaneously. For example, as shown in Fig. 4, the bottom of the printing member P₂ and that of the support member S₂ are on the same plane, and preferably the printing member P₂ and the support member S₂ are made of the same material, so they are formed together layer by layer from the bottom up at the same time.

Preferably, the step of introducing an ammonia gas into the additive manufacturing printing device further comprises the step of partitioning ammonia input according to the additive manufacturing printing area and introducing a second gas into the additive manufacturing printing device for the partition where the nitride layer of the support member is located. The second gas comprises ammonia gas or nitrogen gas, and an embodiment in which a nitrogen gas is introduced requires higher laser input power, but for the sake of brevity

Specifically, additional ammonia gas NH₃ will be inputted into the selective laser melting device 100 through diffusion flow nozzles, each of which corresponds to a different control valve to control the ammonia gas input so that it is close to the desired nitriding area to reduce the impact on the entire printing environment for additive manufacturing. In the printing process, ammonia gas is close to the forming cylinder 150 in the selective laser melting device 100, decomposes, and reacts with a metal material to form a nitride, thus finally forming a nitride layer, for example, iron nitride, aluminum nitride, or nickel nitride. To reduce the impact of ammonia gas on the printing gas environment in the selective laser melting device 100, the ammonia valve opens when it is closest to the nitriding area and only when it is at the nitride layer 200, which is the main surface of contact between the printing member P₂ and the support member S₂. Since the nitriding process is carried out in the vicinity of the melted powder of the forming cylinder 150 only when the ammonia decomposition temperature is high enough, the remaining powder and the printing member P₂ will remain unaffected to ensure high printing quality of the remaining part and effective utilization of the powder material.

The nitride layer 200, as the area of contact between the printing member P₂ and the support member S₂, will ensure a large contact area and a sufficient mechanical supporting force to avoid possible thermal deformation of the material when the printing member S₂ is printed. In addition, the nitride layer 200 has higher thermal conductivity compared with the original metal body, which ensures that the support member S₂ provides high thermal conductivity and printing quality.

With the present invention, it is also possible to control and optimize the thickness of the nitride layer 200 to ensure a sufficient mechanical supporting force by the support member S₂ and facilitates the subsequent removal step.

Further, the support member has a density lower than that of the printing member. Although both the printing member and the support member are made of a metallic powder of the printing member, the material density may be adjusted such that the support member has a density lower than that of the printing member, so as to distinguish between them and avoid waste while ensuring that the support member is sufficiently strong.

Further, non-nitride layer areas of the support member are spaced apart from the printing member. The printing member and the support member contact each other only at the nitride layer in the vertical direction and remain in a non-contact state in most parts where there is no nitride layer, especially in most of the lateral areas, so that the support member is easily removable from the printing member.

Further, the additive manufacturing method further comprises the step of removing the support member from the printing member by applying an external force to the nitride layer of the support member. After 3D printing is performed with the selective laser melting device 100, the printing member P₂ and the support member S₂ are thermally treated together to obtain a stable lattice structure and a sufficient mechanical supporting force. Since thermal expansion coefficients vary between different materials, cracks will appear between the nitride layer 200 and the metal material of the printing member P₂ that is in contact with the nitride layer. In addition, the nitride layer 200 is fragile and has modulus properties relative to the metal material of the printing member P₂. Therefore, the nitrogen bad and removed, for example, high-energy vibration or sand blasting.

The nitride layer has a thickness ranging from 10 microns to 1000 microns. The specific thickness of the nitride layer should be set according to specific process requirements of an application scenario.

With an additive manufacturing method provided by the present invention, it is possible to obtain a support member that is sufficiently strong and easily removable after additive manufacturing is completed, thus ensuring high 3D printing quality while reducing costs. A nitride layer provided by the present invention has a sufficiently large contact area to avoid material thermal deformation and to achieve high thermal conductivity. In addition, the additive manufacturing method provided by the present invention, together with a nitriding support, further comprises a surface hardening step, and the printing member is highly resistant to wear. Compared with a traditional design and manufacturing method, the additive feature unit geometry provided by the present invention has a high ratio of strength to weight and a high ratio of surface area to mass, which allows a reduction of the wall thickness while maximizing the heat exchange surface, but the structural strength and rigidity remain stable, so as to achieve the goal of reducing the weight and improving the overall heat exchange performance of the printed parts.

While the present invention has been described in detail with the above-mentioned preferred embodiments, it should be understood that the above description should not be construed as limiting the present invention. Various modifications and substitutions to the present invention will become readily apparent after reading the above content by those of ordinary skill in the art. Thus, the scope of protection of the present invention should be defined by the attached claims. In addition, no reference signs specified in a claim should be construed as limiting an involved claim; the term "comprising" does not exclude any apparatuses or steps not listed in another claim or the description; terms such as "first" and "second" are used to indicate designations, rather than indicating any specific order.

## Claims

1. An additive manufacturing method, comprising steps of:
on the basis of a shape of a model of a printing member, generating a model of a support member, wherein at least one portion of the support member is in contact with a lower part of at least one portion of the printing member, and a nitride layer is formed on an upper surface of at least one portion of the support member that comes into contact with the printing member;
continuously introducing an inert gas into an additive manufacturing printing device, spreading a first material powder in a forming cylinder in the additive manufacturing printing device, performing laser scanning on the first material powder, such that the first material powder is melted, and on the basis of the model of the printing member, the printing member and the support member, which is in contact with a lower part of one portion of the printing member, are formed layer by layer;
introducing an ammonia gas into the additive manufacturing printing device, spreading the first material powder in the forming cylinder in the additive manufacturing printing device, performing laser scanning on the first material powder, such that the first material powder is melted, and on the basis of the model of the support member, a nitride layer is formed on an upper surface of the support member.

2. The additive manufacturing method as claimed in claim 1, **characterized in that** the step of introducing an ammonia gas into the additive manufacturing printing device further comprises the step of:
partitioning ammonia input according to an additive manufacturing printing area, and introducing a second gas into the additive manufacturing printing device for a partition where the nitride layer of the support member is located.

3. The additive manufacturing method as claimed in claim 1, **characterized in that** the support member has a density lower than that of the printing member.

4. The additive manufacturing method as claimed in claim 1, **characterized in that** non-nitride layer areas of the support member are spaced apart from the printing member.

5. The additive manufacturing method as claimed in claim 4, **characterized in that** the additive manufacturing method further comprises the step of:
removing the support member from the printing member by applying an external force to the nitride layer of the support member.

6. The additive manufacturing method as claimed in claim 5, **characterized in that** a high-energy vibration process or a sand blasting process is adopted in the removal step.

7. The additive manufacturing method as claimed in claim 1, **characterized in that** the second gas is nitrogen gas or ammonia gas.

8. The additive manufacturing method as claimed in claim 1, **characterized in that** the nitride layer has a thickness ranging from 10 microns to 1000 microns.
